(19) Europäisches Patentamt

European Patent Office

Office européen des brevets

(11) Veröffentlichungsnummer: **0 001 391**
**B1**

(12) **EUROPÄISCHE PATENTSCHRIFT**

(21) Anmeldenummer: **78100719.0**

(22) Anmeldetag: **22.08.78**

(51) Int. Cl.³: **B 29 F 3/08**

(54) Vorrichtung in Form eines doppelwandigen Rohres zum Kühlen von Endlosprofilen

(30) Priorität: **08.10.77 DE U 7731245**

(43) Veröffentlichungstag der Anmeldung:
**18.04.79 Patentblatt 79/08**

(45) Bekanntmachung des Hinweises auf die Patenterteilung:
**12.11.80 Patentblatt 80/23**

(84) Benannte Vertragsstaaten:
**BE CH FR GB NL SE**

(56) Entgegenhaltungen:
**DE - A - 2 214 681**
**FR - A - 2 088 148**
**GB - A - 777 845**

(73) Patentinhaber: **MESSER GRIESHEIM GMBH**
**Patentabteilung Hanauer Landstrasse 330**
**D - 6000 Frankfurt/Main (DE)**

(72) Erfinder: **Soecknick, Erhard**
**Am Brockerberg 14**
**D - 4006 Erkrath (DE)**

Courier Press, Leamington Spa, England.

# Vorrichtung in Form eines doppelwandigen Rohres zum Kühlen von Endlosprofilen

Die Erfindung betrifft eine Vorrichtung in form eines doppelwandigen Rohres zum Kühlen von Endlosprofilen, bei der der von Kernrohr und Mantelrohr gebildete Zwischenraum mit Anschlüssen für die Zufuhr eines tiefsiedenden verflüssigten Gases und die Abfuhr des verdampften Gases versehen ist.

Endlosprofile, z.B. Schlauchseelen oder Dichtungsprofile für Automobiltüren, müssen oft unmittelbar nach ihrer Fertigung gekühlt werden. Dies geschieht in rohrförmigen Vorrichtungen, durch welche die Profile hindurchgeführt werden. Das flüssige Kühlmittel wird einem flüssigen Kühlmittel, z.B. flüssigem Stickstoff besprüht werden. Die rohrförmige Vorrichtung kann jedoch auch doppelwandig ausgeführt werden. Das flüssige Kühlmittel wird hierbei in den Zwischenraum ·des doppelwandigen Rohres geleitet und bildet dort beispielsweise ein Bad aus flüssigem Stickstoff. Das verdampfte, aber noch kalte Kühlmittel wird gewöhnlich in den Zwischenraum geleitet, der durch das Innenrohr und das in ihm entlanggeführte Endlosprofil gebildet wird. Er trägt auf diese Weise zur Kühlung des Profils bei. Die Erfindung bezieht sich auf den zuletzt beschriebenen Vorrichtungstyp.

Kühlrohre dieser Art haben einen verhältnismäßig hohen Kühlmittelverbrauch, da die Kälte des verdampften Kühlmittels nur unzureichend ausgenutzt wird. Ursache hierfür ist vor allem eine zu niedrige Gasgeschwindigkeit in dem von Endlosprofil und Innenrohr gebildeten Raum. Das Innenrohr besitzt nämlich einen so großen Durchmesser, daß gegebenenfalls auch die größten auftretenden Profilquerschnitte durch das Innenrohr bewegt werden können. Wenn dann Profile mit kleinerem Querschnitt durch das innere Rohr bewegt werden, verbleibt ein großer freier Querschnitt, in welchem sich nur eine mäßige Gasgeschwindigkeit ausbilden kann. Dieser nachteilige Effekt wird noch verstärkt durch die Tatsache, daß ein Profil mit kleinerem Querschnitt auch einen geringeren Kältebedarf hat als ein Profil mit großem Querschnitt. Es verdampft daher entsprechend weniger Kühlmittel, so daß eine geringere Gasmenge durch einen vergrößerten Querschnitt strömt.

Der Erfindung liegt daher die Aufgabe zugrunde, eine Vorrichtung in Form eines doppelwandigen Rohres zum Kühlen von Endlosprofilen, bei der der von Kernrohr und Mantelrohr gebildete Zwischenraum mit Anschlüssen für die Zufuhr eines tiefsiedenden verflüssigten Gases und die Abfuhr des verdampften Gases versehen ist, so zu verbessern, daß der Kälteinhalt des verdampften Gases unabhängig vom Querschnitt des jeweiligen Endlosprofils gleichmäßig gut asugenutzt werden kann.

Gemäß der Erfindung wird dies dadurch erreicht, daß das Kernrohr austauschbar in das Mantelrohr eingesetzt ist, damit es dem Querschnitt des zu kühlenden Endlosprofils angepasst werden kann, sowie in der Nähe der Eintrittsöffnung mindestens eine Einblasöffnung für die Zufuhr des verdampften Gases in den von Kernrohr und Endlosprofil gebildeten Zwischenraum aufweist.

Bei einer vorteilhaften Ausführung der erfindungsgemäßen Vorrichtung sind den Einblasöffnungen zur Zufuhr des verdampften Gases Blasdüsen zugeordnet, deren Blasrichtung von außen einstellbar ist. Die Blasdüsen können so eingestellt werden, daß das verdampfte Gas nur aus der Austrittsöffnung des ·Kühlrohres entweicht. Dies bedeutet praktisch eine Verdoppelung der Gasgeschwindigkeit mit einer entsprechenden Verbesserung des konvektiven Wärmeüberganges.

Durch die Anpassung des Querschnitts des Kernrohres an den Querschnitt des zu kühlenden Endlosprofils wird erreicht, daß der Querschnitt des von Kernrohr und Endlosprofil gebildeten Strömungskanals klein bleibt, also ein entsprechend guter konvektiver Wärmeübergang erreicht wird. Die Austauschbarkeit des Kernrohres ermöglicht es, ein dem jeweiligen Profilquerschnitt angepaßtes Kernrohr zu verwenden, wodurch eine gleichmäßig hohe Gasgeschwindigkeit bei den verschiedensten Profilen gewährleistet wird.

Die Zeichnungen veranschaulichen ein Ausführungsbeispiel der Erfindung.

Es zeigen:

Fig. 1 einen Längschnitt durch die Vorrichtung

Fig. 2 einen Querschnitt entlang der Linie AB in Fig. 1.

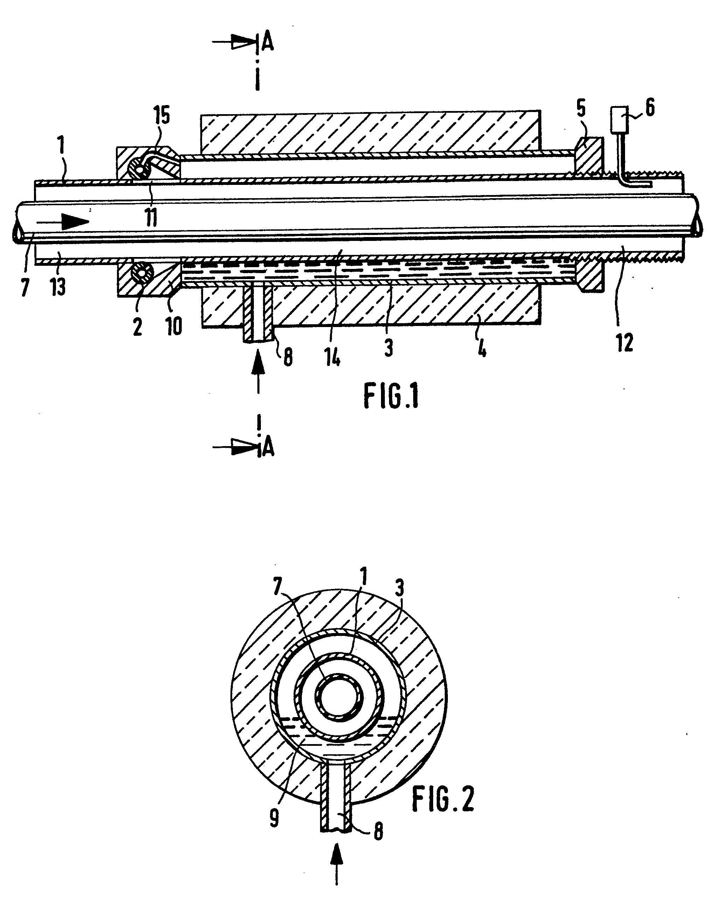

Die in den Fig. 1 und 2 dargestellte Vorrichtung besitzt ein auswechselbares Kernrohr 1, welches unter Ausbildung eines Zwischenraumes in dem Mantelrohr 3 angeordnet ist. Das Mantelrohr 3 ist mit einer Isolierung 4 versehen. Es besitzt ferner eine Zuführleitung 8 für das Kühlmittel, flüssigen Stickstoff. In dem Zwischenraum zwischen Kernrohr 1 und Mantelrohr 3 wird ein Bad 9 aus flüssigem Stickstoff gebildet. Das Kernrohr 1 ist ferner mit dem Düsenstellkopf 10 fest verbunden, in welchem die Blasdüsen 2 angeordnet sind. Unter dem Düsenstellkopf 10 sind die Einblasöffnungen 11 im Kernrohr 1 angeordnet. Mit Hilfe des Düsenstellkopfes 10 läßt sich die Blasrichtung der Blasdüsen 2 so regulieren, daß das verdampfte gasförmige Kühlmittel ausschließlich aus der Austrittsöffnung 12 des Kühlrohres austritt, durch die Eintrittsöffnung 13 jedoch keine Luft angesaugt wird. Der Querschnitt des Kernrohres 1 ist dem Querschnitt des zu kühlenden Endlosprofils, in diesem Fall einer Schlauchseele 7, so angepaßt, daß sich in dem von der Schlauchseele 7 und dem Kernrohr 1 gebildeten Strömmungskanal 14 eine optimale Gasgeschwindigkeit einstellt. Hierdurch läßt sich ein hervorragender konvektiver Wärmeübergang erreichen. An der Austrittseite des Kühlrohres ist das Kernrohr 1 mittels einer Mutter 5 befestigt. Der Strömmungskanal 14 ist mit den Blasdüsen 2 durch die Leitung 15 verbunden. Durch Lösen der Mutter 5 kann das Kernrohr 1 mit dem Düsenstellkopf 10 herausgezogen und durch ein anderes ersetzt werden. Hierdurch kann für jedes Endlosprofil ein guter Füllgrad erreicht werden. Unter Füllgrad versteht man das Verhältnis von Profilquerschnitt zu Kernrohrquerschnitt. Um einen guten Wirkungsgrad für die Ausnutzung der Kälte des verdampften Kühlmittels zu erreichen, soll der Füllgrad zwischen 0,7 und 0.9 liegen.

Die Regelung der Kühltemperatur der Schlauchseele 7 erfolgt mittels eines Thermofühlers 6, der über einen in der Zeichnung nicht dargestellten Regler im Ist—Sollwert—Vergleich die Zufuhr des flüssigen Stickstoffs regelt. Der Thermofühler 6 mißt dabei die Gastemperatur, die mit der Temperatur der Schlauchseele 7 in einem festen Zusammenhang steht. Wird eine hohe Kühltemperatur verlangt, so wählt man an der Meßstelle eine entsprechende Gastemperatur über den Regler. Der gewählten Gastemperatur entspricht das Angebot an flüssigem Stickstoff in dem zwischen Mantelrohr und Kernrohr befindlichen Ringraum. Als Stellglied für die Zufuhr des flüssigen Stickstoffs wird ein Magnetventil verwendet.

Die Länge des Kühlrohres ist abhängig von der Kühltemperaturdifferenz des zu kühlenden Endlosprofils.

Der spezifische Verbrauch an flüssigem Stickstoff ist bei dem Kühlrohr gemäß der Erfindung außerordentlich gering, da eine hervorragende Ausnutzung der Gaskälte erfolgt. Der Wirkungsgrad liegt über 90%.

**Patentansprüche**

1. Vorrichtung in Form eines doppelwandigen Rohres zum Kühlen von Endlosprofilen, bei der der von Kernrohr (1) und Mantelrohr (3) gebildete Zwischenraum mit Anschlüssen für die Zufuhr eines tiefsiedenden verflüssigten Gases und die Abfuhr des verdampften Gases versehen ist, dadurch gekennzeichnet, daß das Kernrohr (1) ausfauschbar in das Mantelrohr (3) eingesetzt ist, damit es dem Querschnitt des zu kühlenden Endlosprofils (7) angepaßt werden kann, sowie in der Nähe der Eintrittsöffnung (13) mindestens eine Einblasöffnung (11) für die Zufuhr des verdampften Gases in den von Kernrohr (1) und Endlosprofil (7) gebildeten Zwischenraum aufweist.

2. Vorrichtung nach Anspruch 1, dadurch gekennzeichnet, daß den Einblasöffnungen (11) Blasdüsen (2) zugeordnet sind, deren Blasrichtung von außen einstellbar ist.

**Claims**

1. Arrangement in the form of a doublewalled pipe for cooling of endless profiles, in which the intermediate space formed by the core pipe (1) and jacket pipe (3) are provided with connections for the supply of a low boiling liquified gas and the discharge of the evaporated gas, characterized thereby that the core pipe (1) is inserted exchangeably into the jacket pipe (3), so that it may be adapted to the cross-section of the endless profile (7) which is to be cooled and that there is provided in the region of the inlet opening (13) at least one injection opening (11) for the supply of the evaporated gas into the intermediate space formed between the core pipe (1) and the endless profile (7).

2. Arrangement according to claim 1, characterized thereby that the injection openings (11) have injection nozzles (2), of which the injection direction is adjustable from the outside.

**Revendications**

1. Dispositif revêtant la forme d'un tube à double paroi pour le refroidissement de profilés sans fin, dispositif dans lequel l'espace intermédiaire délimité par le tube central (1) et le tube enveloppe (3) est muni de raccords pour l'amenée d'un gaz liquéfié à bas point d'ébullition et pour l'évacuation de ce gaz après vaporisation, dispositif caractérisé en ce que le tube central (1) est monté de façon amovible dans le tube enveloppe (3) de façon qu'il puisse être adapté à la section transversale du profil sans fin (7) à refroidir, tandis que ce tube central comporte au voisinage de son ouverture d'entrée (13) au moins un orifice d'insuflation (11) pour amener du gaz vaporisé dans l'espace intermédiaire délimité par ce tube central (11) et le profil sans fin (7).

2. Dispositif selon la revendication 1, caractérisé en ce que des buses de soufflage (2) sont associées aux orifices d'insuflation (11), la direction dans laquelle soufflent ces buses étant susceptible d'être ajustée de l'extérieur.

FIG.1

FIG.2